Europäisches Patentamt

European Patent Office

Office européen des brevets

(11) Veröffentlichungsnummer: **0 306 629 B1**

(12) **EUROPÄISCHE PATENTSCHRIFT**

(45) Veröffentlichungstag der Patentschrift: **03.11.93**

(21) Anmeldenummer: **88109263.9**

(22) Anmeldetag: **10.06.88**

Die Akte enthält technische Angaben, die nach dem Eingang der Anmeldung eingereicht wurden und die nicht in dieser Patentschrift enthalten sind.

(51) Int. Cl.⁵: **C08G 16/02**, C04B 24/22

(54) Verfahren zur Herstellung von Verflüssigungsmitteln für mineralische Bindemittel.

(30) Priorität: **11.09.87 DE 3730532**

(43) Veröffentlichungstag der Anmeldung:
**15.03.89 Patentblatt 89/11**

(45) Bekanntmachung des Hinweises auf die Patenterteilung:
**03.11.93 Patentblatt 93/44**

(84) Benannte Vertragsstaaten:
**AT BE CH DE ES FR GB GR IT LI LU NL SE**

(56) Entgegenhaltungen:
**DE-B- 2 007 603**
**DE-C- 292 531**
**US-A- 2 141 569**
**US-A- 3 277 162**

**Römpps Chemie Lexikon ,8. Auflage, Seiten 4529-4532;**

**Encyclopedia of Polymer Science and Tecnology, Band 14, Seiten 488-490.**

**Macromolecules, Volume 1, Second Edition, page 261**

(73) Patentinhaber: **RÜTGERSWERKE AKTIENGE-SELLSCHAFT**
**Mainzer Landstrasse 217**
**D-60326 Frankfurt(DE)**

(72) Erfinder: **Omran, Jafar, Dr.**
**Ahornstrasse 25**
**D-4620 Castrop-Rauxel(DE)**
Erfinder: **Alscher, Arnold, Dr.**
**Zeissbogen 10**
**D-4300 Essen 1(DE)**

**Beschreibung**

Die Erfindung betrifft ein neues Verfahren zur Herstellung von Verflüssigungsmitteln für mineralische Bindemittel auf Basis von wasserlöslichen Kondensationsprodukten von Naphthalin oder Alkylnaphthalinen mit Formaldehyd.

Mineralische Bindemittel, zu denen hydraulische Bindemittel wie Zement, hydraulischer Kalk, Gips oder Anhydrit oder nur an der Luft erhärtende Bindemittel wie Kalk gehören, werden vor ihrer Anwendung beim Bau allein oder in Abmischung mit Zuschlagstoffen mit Wasser in eine verarbeitbare, d. h. knetbare, streichfähige, pumpbare oder fließfähige Form gebracht.

Dabei ergibt sich im allgemeinen das Problem, daß zum Anteigen dieser Bindemittel und Zuschlagstoffe wesentlich mehr Anmachwasser notwendig ist, als bei der darauffolgenden chemischen Vernetzungsreaktion benötigt wird.

Die Folge ist, daß nach dem Abbinden das überschüssige Wasser verdunsten muß und der von ihm eingenommene Platz im Baukörper als Hohlraum zurückbleibt. Durch diese Hohlräume wird die mechanische Festigkeit des Baukörpers in starkem Masse beeinträchtigt. Dies ist besonders bei Betonbauten von großer technischer Bedeutung.

Man gibt daher dem Wasser/Bindemittel-Gemisch geringe Mengen eines Verflüssigungsmittels zu und erzielt damit eine Reduzierung des Wasseranteils bei gleichbleibender Fließfähigkeit ohne die Wassermenge erhöhen zu müssen, was z. B. bei Fließestrichen sehr wesentlich ist.

Besonders günstige Ergebnisse hinsichtlich der Verflüssigungswirkung, der Stabilität der Mischungen vor und während des Abbindevorgangs und der geringen Abhängigkeit des Abbindeverhaltens von der Dosierung der Verflüssigungsmittel zeigen solche auf Basis von wasserlöslichen Kondensationsprodukten von sulfoniertem Naphthalin oder Alkylnaphthalin mit Formaldehyd wie sie z. B. aus DE-AS 1 238 831 oder DE-PS 2 007 603 bekannt sind. In diesen Schriften wird Verfahren zur Herstellung der Kondensate offenbart. Demnach wird Naphthalin mit konzentrierter Schwefelsäure sulfoniert, zur sauren Sulfonatlösung werden bei 80 °C innerhalb von 3 h die entsprechende Menge Formalin zugegeben. Danach wird das Reaktionsgemisch auf 95 bis 100 °C erhitzt, bei dieser Temperatur 25 h lang gehalten und dann mit Wasser verdünnt und mit Lauge neutralisiert. Als Betonverflüssiger wird eine etwa 35 %ige Lösung eines Alkalisalzes des entstandenen Kondensationsprodukts, gegebenenfalls mit weiteren Zusätzen wie etwa Glukonat, eingesetzt.

Um die Kondensation und die Eigenschaften dieser an sich guten Betonverflüssiger noch weiter zu verbessern, wird versucht, die Kondensationsbedingungen zu modifizieren.

So wird z. B. gemäß US-A 2 141 569 die Kondensation in der Art durchgeführt, daß die Formaldehydlösung portionsweise zur Naphthalinsulfonatlösung zugegeben wird.

Nach US-A 3 277 162 wird das Reaktionsgemisch während der Kondensation viermal mit jeweils gleichen Wassermengen verdünnt. Die erhaltenen Kondensationsprodukte zeigen jedoch bei ihrem Einsatz in Zementmischungen eine noch nicht zufriedenstellende Verflüssigungswirkung.

Es besteht somit weiterhin der Bedarf nach Betonverflüssigern, die bei gleicher Wirtschaftlichkeit in ihrer Wirkung hinsichtlich Verflüssigung und erzielter Druck - und Biegefestigkeit des Betons verbessert sind.

Die Lösung der Aufgabe erfolgt durch die Herstellung der Verflüssiger nach einem Verfahren gemäß den Ansprüchen 1 und 2.

Es wurde gefunden, daß durch eine einfache Modifizierung des Kondensationsprozesses die Eigenschaften dieser Verflüssiger wesentlich verbessert wird.

Eine Erklärung für die damit erzielte Verbesserung der Eigenschaften als Verflüssigungsmittel für mineralische Bindemittel ist noch nicht gesichert, jedoch wird vermutet, daß durch die erfindungsgemäße Verfahrensweise die Bildung hochmolekularer Kondensate unterdrückt und bevorzugt die Bildung von Kondensaten erzielt wird, die 2 bis 4 Naphthalin- oder Alkylnaphthalin-Kerne enthalten und die sich überraschenderweise als bessere Verflüssigungsmittel erweisen.

Ausgangsprodukte für das erfindungsgemäße Verfahren sind Naphthalin- oder Alkylnaphthalinsulfonate und Formaldehyd oder eine unter Reaktionsbedingungen Formaldehyd abspaltende Substanz, die in stark saurem Reaktionsmedium bei einer Reaktionstemperatur von 95° C kondensiert werden.

Naphthalin- oder Alkylnaphthalinsulfonate werden in an sich bekannter Weise durch Sulfonieren von Naphthalin oder Alkylnaphthalinen insbesondere Methyl- oder Ethylnaphthalinen bzw. deren Gemischen miteinander oder mit Naphthalin, hergestellt.

Bevorzugt erfolgt die Sulfonierung mit konzentrierter Schwefelsäure oder Oelum, da dann direkt das Reaktionsgemisch aus der Sulfonierung für die weitere Umsetzung mit Formaldehyd verwendet werden kann. Für diese Umsetzung werden dem Reaktionsgemisch gegebenenfalls weitere Säuren, bevorzugt Schwefelsäure und langsam Formaldehyd oder eine Substanz, die unter den Reaktionsbedingungen Formaldehyd abzuspalten vermag, zugesetzt. Produkte dieser Art sind z. B. Formaldehyd selbst bzw. dessen handelsübliche 30- bis 50 %ige wäßrige Lösung (Formalin) oder Substanzen, die Formaldehyd in chemisch lockerer Form gebunden enthalten, wie Formaldehydbisulfit, Urotropin, Trioxymethylen oder Paraformaldehyd.

Die Mengen an eingesetztem Formaldehyd liegen im Bereich von 0,8 bis 1,2 Mol pro Mol der sulfonsauren Produkte.

Nach der Formaldehydzugabe hat das Reaktionsgemisch der Kondensationsreaktion eine Anfangsviskosität von 5 bis 20 mPas (bei 95° C). Diese Viskosität steigt im Verlaufe der Kondensation innerhalb von 16 bis 19 h auf 5.000 bis 7.500 mPas an. Danach beginnt der erfindungsgemäße Teil des Verfahrens, die Reduzierung der Viskosität während der weiteren Kondensation. Die Reduzierung der Viskosität der Reaktionsmischung kann entweder im Verlaufe der Kondensation diskontinuierlich erfolgen oder kontinuierlich während der Kondensationsreaktion.

Die Durchführung des Verfahrens bei der diskontinuierlichen Reduzierung der Viskosität ergibt sich, wenn die Naphthalin- oder Alkylnaphthalin-Sulfonate mit Formaldehyd kondensiert werden, bis das Reaktionsgemisch das eine Anfangsviskosität (bei 95° C) von 5 bis 20 mPas hat, eine Viskosität von 4.000 bis 8.000 mPas, bevorzugt von 5.000-7.500 mPas, erreicht, danach die Viskosität durch Zugabe von Wasser auf 2.000 bis 3.000 mPas reduziert wird. Danach wird erneut kondensiert bis zu einer Viskosität von 3.200 bis 3.900 mPas, darauf erneut die Viskosität durch Zugabe von Wasser auf 1.100 bis 1.500 mPas reduziert und erneut kondensiert wird, bis eine Viskosität von 1.600 bis 2.200 mPas erreicht ist. Nun wird durch Zugabe von Wasser und Neutralisation mit einer Lauge die Kondensation beendet, wobei die Wassermenge so gewählt wird, daß eine 35 %ige Lösung des Alkali-Salzes eines Naphthalin- oder Alkylnaphthalin-Formaldehyd-Kondensationsproduktes erhalten wird.

Die kontinuierliche Reduzierung der Viskosität erfolgt durch kontinuierliche Wasserzugabe zum Reaktionsgemisch sobald eine Grundviskosität von 4.000 bis 8.000 mPas, bevorzugt von 5.000-7.500 mPas, erreicht ist. Dabei wird die Reaktionstemperatur von 95° C beibehalten, d. h., die Kondensationsreaktion wird nicht unterbrochen sondern kontinuierlich 5 bis 7 h lang weitergeführt. Die kontinuierliche Wasserzugabe wird daher so eingestellt, daß das Reaktionsgemisch am Ende der Kondensation, wenn der Anteil an nicht kondensierten Naphthalin- oder Alkylnaphthalinsulfonaten weniger als 2 % bis 3 % der ursprünglichen eingesetzten beträgt, im Bereich von 1.600 bis 2.200 mPas liegt.

Danach wird, wie bei der diskontinuierlichen Fahrweise, das Reaktionsgemisch mit einer Alkalilauge (Natrium- oder Kaliumhydroxid) neutralisiert und mittels weiterer Wasserzugabe verdünnt, so daß eine 35 %ige wäßrige des Alkali-Salzes eines Naphthalin-oder Alkylnaphthalin-Formaldehyd-Kondensationsproduktes erhalten wird.

Dieses Produkt wird unverändert in an sich bekannter Weise als Verflüssigungsmittel für mineralische Bindemittel, insbesondere als Betonverflüssiger eingesetzt.

Beispiele

Beispiel 1

Vergleichsbeispiel (Kondensationsprodukt gemäß DE-AS 1 238 831)

In einem Dreihalskolben, versehen mit Rührer, Tropftrichter, Thermometer und Kühler werden 576 g Naphthalin bei 120° C innerhalb von 1 h mit 576 g 96 %iger Schwefelsäure sulfoniert. Dann wird auf 160° C erhitzt und 3 h lang bei dieser Temperatur gerührt. Nach dem Abkühlen auf 120° C werden 435 g Wasser und danach 230 g 96 %ige Schwefelsäure rasch zugegeben. Es wird auf 80° C abgekühlt und innerhalb von 3 h 365 g 37 %iges Formalin zugetropft. Im Anschluß an den Zusatz des Formalins wird die Temperatur der Mischung auf 95 bis 100° C im Verlaufe einer Stunde erhöht. Dann läßt man die Reaktion 25 h bei dieser Temperatur weiterhin vor sich gehen. Danach wird die Lösung mit 1.314 g Wasser verdünnt und mit 1.160 g 40 %iger Natronlauge neutralisiert. Das so entstandene Produkt ist eine 35 %ige Lösung des Natrium-Salzes eines Naphthalin-Sulfonsäure-Formaldehyd-Kondensationsproduktes.

Beispiel 2

Erfindungsgemäße Kondensation

In einem Dreihalbkolben, versehen mit Rührer, Tropftrichter, Thermometer und Kühler werden 576 g Naphthalin bei 120° C innerhalb von 1 h mit 576 g 96 %iger Schwefelsäure sulfoniert. Dann wird auf 160° C erhitzt und 3 h lang bei dieser Temperatur gerührt. Nach dem Abkühlen auf 120° C 435 g Wasser und danach 230 g 96 %iger Schwefelsäure rasch zugegeben. Es wird auf 80° C abgekühlt und innerhalb von 3 h 365 g 37 %iges Formalin zugetropft. Dann wird auf 95° C erwärmt, 18 h lang bei dieser Temperatur bis zu einer Viskosität von 6.800 mPas gerührt, 100 g $H_2O$ zugegeben, worauf sich die Viskosität auf einen Wert von 2.450 mPas einstellt, weitere 2 h lang bei 95° C gerührt bis zu einer Viskosität von 3.750 mPas, noch einmal 100 g Wasser zugegeben, worauf die Viskosität einen Wert von 1.325 mPas erreicht, noch weitere 4 h bei 95° C bis zu einer Viskosität von 1.750 mPas gerührt und mit der Zugabe von 1.114 g Wasser die Reaktion beendet. Die so enthaltene Harzlösung wird mit 1.160 g 40 %iger Natronlauge bis zu einem pH-Wert von 10,0 neutralisiert. Das so entstandene Produkt ist eine 35 %ige Lösung des Natrium-Salzes eines Naphthalin-Sulfonsäure-Formaldehyd-Kondensationsproduktes.

Beispiel 3

Verwendung als Verflüssigungsmittel

Die Prüfung als Verflüssigungsmittel (BV) für Zement erfolgt durch Untersuchungen damit hergestellter Mörtel und des ausgehärteten Betons gemäß den DIN-Vorschriften
DIN 18555, Anschnitt 9 - Ausbreitmaß
DIN 1164, Teil 7 - Festigkeit
DIN 1164, Teil 5 - Erstarrungsprüfung
Dazu werden Versuchsgemische herangezogen, die sich im eingesetzten Verflüssigungsmittel unterscheiden,
    450 g        Hochofenzement HOZ 35 L
    1.350 g     Normalsand nach DIN 1164 Wasser, entsprechend den angegebenen Wasser-/Zement-Faktoren
    4,5 g        Verflüssigungsmittel (BV) aus Beispiel 1 (B 1) bzw. aus Beispiel 2 (B 2)
Parallel werden die Versuche als O-Versuche ohne Verflüssigungsmittel durchgeführt.
Die ermittelten Werte sind in der nachfolgenden Aufstellung angegeben:

| | Gemisch 1 (BV Nach B 1) | Gemisch 2 (BV nach B 2) | O-Versuch |
|---|---|---|---|
| Wasser-/Zement-Faktor | 0,43 | 0,405 | 0,5 |
| Druckfestigkeit (N/mm²) nach 2 d | 17 | 30 | 14 |
| 7 d | 36 | 52 | 31 |
| 28 d | 48 | 62 | 46 |
| Biegezugfestigkeit (N/mm²) nach 2 d | 3,08 | 4,30 | 3,05 |
| 7 d | 4,86 | 6,25 | 4,84 |
| 28 d | 5,51 | 6,58 | 5,45 |
| Ausbreitmaß (mm) | 243 | 262 | 130 |
| Wassereinsparung (%) | 14 | 18 | --- |
| Erstarrungsbeginn | 3 h 20 min | 3 h 25 min | 2 h 50 min |
| Erstarrungsende | 4 h 15 min | 4 h 20 min | 3 h 50 min |

**Patentansprüche**

1. Verfahren zur Herstellung von Verflüssigungsmitteln für mineralische Bindemittel, durch Kondensation von Naphthalin- oder Alkylnaphthalin-Sulfonaten mit Formaldehyd bei 95 °C in der Reaktionslösung, die bei der Sulfonierung erhalten wurde und der ggf. weitere Säuren zugesetzt werden, dadurch gekennzeichnet, daß 0,8 bis 1,2 Mol Formaldehyd pro Mol sulfonsaurem Naphthalin oder Alkylnaphthalin eingesetzt werden und daß die Viskosität der Reaktionsmischung, die eine Anfangsviskosität von 5 bis 20 mPa•s bei 95 °C hat, während der Kondensationsreaktion und nach Erreichen einer Grundvis-

EP 0 306 629 B1

kosität von 4 000 bis 8 000 mPa•s bei 95 °C, bevorzugt von 5 000 bis 7500 mPa•s, durch Wasserzugabe auf eine Viskosität von 2 000 bis 3 000 mPa•s bei 95 °C reduziert wird, danach erneut kondensiert wird bis zu einer Viskosität von 3 200 bis 3 900 mPa•s bei 95 °C, darauf erneut die Viskosität durch Zugabe von Wasser auf 1100 bis 1500 mPa•s bei 95 °C reduziert und erneut kondensiert wird, bis eine Viskosität von 1 600 bis 2 200 mPa•s bei 95 °C erreicht ist, wonach durch Zugabe von Wasser und Neutralisation mit einer Lauge die Kondensation beendet wird, wobei die Wassermenge so gewählt wird, daß eine 35 %ige Lösung des Alkali-Salzes eines Naphthalin- oder Alkylnaphthalin-Formaldehyd-Kondensationsproduktes erhalten wird.

2. Verfahren zur Herstellung von Verflüssigungsmitteln für mineralische Bindemittel, durch Kondensation von Naphthalin- oder Alkylnaphthalin-Sulfonaten mit Formaldehyd bei 95 °C in der Reaktionslösung, die bei der Sulfonierung erhalten wurde und der ggf. weitere Säuren zugesetzt werden, dadurch gekennzeichnet, daß pro Mol Naphthalin- oder Alkylnaphthalin-Sulfonate 0,8 bis 1,2 Mol Formaldehyd kondensiert werden, bis das Reaktionsgemisch das eine Anfangsviskosität von 5 bis 20 mPa•s hat, bei 95 °C eine Viskosität von 4 000 bis 8 000 mPa•s, bevorzugt von 5 000 bis 7 000 mPa•s erreicht, danach unter Beibehaltung der Reaktionstemperatur von 95 °C durch kontinuierliche Wasserzugabe die Viskosität innerhalb von 5 bis 7 h auf 1 600 bis 2 200 mPa•s bei 95 °C gesenkt wird, wonach durch Zugabe von Wasser und Neutralisation mit einer Lauge die Kondensation beendet wird, wobei die Wassermenge so gewählt wird, daß eine 35 %ige Lösung des Alkali-Salzes eines Naphthalin- oder Alkylnaphthalin-Formaldehyd-Kondensationsproduktes erhalten wird.

**Claims**

1. A process for the preparation of liquefying agents for mineral binders, by condensation of naphthalene- or alkylnaphthalene-sulphonates with formaldehyd at 95 °C in the reaction solution obtained by the sulfonation reaction to which further acids might be added, charcterized in that per mole of acid sulfonated naphthalene or alkylnaphthalene 0,8 to 1,2 moles of formaldehyde are used and that the viscosity of the reaction mixture, which has an initial viscosity at 95 °C of 5 to 20 mPa.s, is reduced by the addition of water during the condensation reaction and after achieving a base viscosity of 4.000 to 8.000 mPas, preferably 5.000-7.500 mPas to a viscosity of 2.000 to 3.000 mPas at 95 °C, thereafter the reaction mixture is condensed again to a viscosity of 3.200 to 3.900 mPas at 95 °C and the viscosity is reduced again by addition of water to 1.100 to 1.500 mPas at 95 °C, thereafter the reaction mixture is condensed again to a viscosity of 1.600 tp 2.200 mPa.s at 95 °C after which by addition of water and by neutralisation with alkali the condensation reaction is stopped whereas the water is used in an amount that a solution of 35 % of the alkali salt of a naphthalene- or alkylnaphthalene-formaldehyde condensation product is obtained.

2. A process for the preparation of liquefying agents for mineral binders, by condensation of naphthlene- or alkylnaphthalene-sulphonates with formaldehyde at 95 °C in the reaction solution obtained by the sulfonation reaction to which further acids might be added, characterized in that per mole of acid sulfonated naphthalene or alkylnaphthalene 0,8 to 1,2 moles of formaldehyde are condensed until the reaction mixture, which has an initial viscosity at 95 °C of 5 to 20 mPa.s, achieves a viscosity of 4.000 to 8.000 mPa.s, preferably 5.000 to 7.500 mPa.s, the viscosity is then lowered within 5 to 7 h to 1.600 to 2.200 mPa.s at 95 °C while maintaining the reaction temperature at 95 °C by continuous addition of water, after which condensation is terminated by the addition of water and neutralization with an alkaline solution, the quantity of water being selected in such a way that a 35 % solution of the alkali salt of a naphthalene- or alkylnaphthalene-formaldehyde condensation product is obtained.

**Revendications**

1. Procédé de fabrication de fluidfiants pour des liants minéraux par condensation de naphtalène- ou alkylphtalènesulfonates avec du formaldéhyde en solution obtenue par la réaction sulfonante, dans laquelle d'acide additionel peut être ajoutée caractérisé en ce que 0,8 à 1,5 moles de formaldehyde sont ulilisé par un mole d'acide sulfonique de naphtalène ou d'alkylnaphtalène et que la viscosité du mélange réactionnel, qui possède une viscosité de départ de 5 à 20 mPa.s à 95 °C, pendant la réaction de condensation et après obtention d'une viscosité de base de 4.000-8.000 mPa.s à 95 °C de préférance de 5.000-7.500 mPa.s à 95 °C, la viscosité du mélange réactionnel est réduite par une addition d'eau à une viscosité de 2.000 à 3.000 mPa.s à 95 °C, enfin après une autre condensation à

6

une viscosité de 3.200 à 3.200 mPa.s à 95 °C la viscosité ist réduite par une addition d'eau à 1.100 à 1.500 mPa.s et qu'il est encore condensé jusqu'une viscosité de 1.600 à 1.700 mPa.s est obtenue, enfin, par addition d'eau et neutralisation avec une base la réaction de condensation est terminée et la quantité d'eau est choisie qu'une solution à 35 % d'un sel alkalin d'un produit de condensation de naphtalène- ou alkylnaphtalène-formaldéhyde est obtenue.

2.  Procédé de fabrication de fluidifiants pour des liants minéraux par condensation de naphtalène- ou alkylnaphtalènesulfonates avec du formaldéhyde en solution obtenue par la réaction sulfonante, dans laquelle d'acide additionel peut être ajoutée caractérisé en ce que 0,8 à 1,5 moles de formaldéhyde sont condensés par un mole d'acide sulfonique de naphtalène ou d'alkylnaphtalène jusqu'à ce que le mélange réactionnel qui possède une voscosité initiale de 5 à 20 mPa.s à 95 °C atteigne une viscosité de 4.000 à 8.000 mPa.s à 95 °C, de préférence de 5.000 à 7.500 mPa.s à 95 °C, qu'après cela la viscosité est abaissée, avec maintien de la température de réaction de 95 °C, jusqu'à 1.600 à 2.200 mPa.s à 95 °C en l'espace de 5 à 7 h par une addition continue d'eau, après quoi la condensation est achevée par addition d'eau et neutralisation avec une lessive alcaline, la quantité d'eau étant choisie de manière que l'on obtienne une solution à 35 % du sel alcalin d'une produit de condensation de naphtalène- ou alkylnaphtalène-formaldéhyde.